# EUROPEAN PATENT APPLICATION

(11) **EP 3 604 430 A1**
(43) Date of publication of application: **05.02.2020**
(21) Application number: 18777870.9
(22) Date of filing: 29.03.2018
(51) Int. Cl.: C08L 27/12, B32B 27/28, C08F 2/26, C08F 214/24, C08F 290/06, C09D 5/02, C09D 127/12, C09D 155/00, C09D 201/06

(54) **AQUEOUS DISPERSION AND PRODUCTION METHOD FOR AQUEOUS DISPERSION**

(30) Priority: 29.03.2017 JP 2017064744; 22.12.2017 JP 2017246544
(71) Applicant: AGC Inc., Chiyoda-ku Tokyo 100-8405 (JP)
(72) Inventor: KAKIUCHI Toshifumi, Tokyo 100-8405 (JP); NAKASHIMA Toshio, Tokyo 100-8405 (JP); MUROTANI Eisuke, Tokyo 100-8405 (JP); SAITO Shun, Tokyo 100-8405 (JP); ISHITSUKA Kei, Tokyo 100-8405 (JP)
(74) Representative: Müller-Boré & Partner Patentanwälte PartG mbB
(86) International application number: PCT/JP2018/013300
(87) International publication number: WO 2018/181736

(57) **Abstract**

An object of the present invention is to provide an aqueous dispersion capable of forming a coating film excellent in coloring stability, a method for producing the aqueous dispersion, an aqueous coating material and a coated article. This aqueous dispersion comprises water, a surfactant and a fluorinated polymer, wherein the fluorinated polymer is dispersed in the water, wherein the fluorinated polymer comprises units based a fluoroolefin and units based on a monomer having a hydrophilic group, and the surfactant is a compound of such a structure that to a benzene ring, 1 group represented by the formula -(OQ)ₙOSO₃⁻X⁺ and 2 to 4 phenyl alkyl groups are bonded (where Q represents a C₂₋₄ alkylene group, n represents an integer of from 2 to 48, and X⁺ represents Na⁺ or NH₄⁺).

## Description

### TECHNICAL FIELD

The present invention relates to an aqueous dispersion having a fluorinated polymer dispersed in water, and a method for producing such an aqueous dispersion.

### BACKGROUND ART

From the viewpoint of environmental protection, in the field of coating materials, an aqueous coating material using water as a coating solvent has attracted attention. Further, from the viewpoint of coating film properties such as weather resistance, chemical resistance, solvent resistance, etc., an aqueous coating material containing a fluorinated polymer has been expected. Among them, a coating film formed from an aqueous coating material containing a fluorinated polymer having a hydrophilic group, is excellent in film properties such as adhesion to a substrate, coating film hardness, etc.

Patent Document 1 discloses, as an aqueous coating material containing such a fluorinated polymer, an aqueous dispersion containing water and sodium lauryl sulfate, wherein a fluorinated polymer comprising units based on a fluoroolefin and units based on a monomer having a hydroxy group or a carboxy group is dispersed in water.

### PRIOR ART DOCUMENT

### PATENT DOCUMENT

Patent Document 1: Japanese Patent No. 3414465

### DISCLOSURE OF INVENTION

### TECHNICAL PROBLEM

In recent years, a coating film to be formed from an aqueous coating material is required to be excellent also in coloration stability. However, according to studies of the present inventors, coloration stability of the coating film formed from the aqueous coating material containing a fluorinated polymer having a hydroxy group or a carboxy group obtainable by referring to Patent Document 1, did not meet the level of demand required nowadays.

In view of the above problem, it is an object of the present invention to provide an aqueous dispersion capable of forming a coating film excellent in coloration stability, a method for producing such an aqueous dispersion, an aqueous coating material and a coated article.

### SOLUTION TO PROBLEM

The present inventors have made intensive studies in order to solve the above problem, and as a result, have found it possible to obtain the desired effect if a specific surfactant is incorporated to the aqueous dispersion, and thus have arrived at the present invention.

That is, the present inventors have found it possible to solve the above problem by the following constructions.
[1] An aqueous dispersion comprising water, a surfactant and a fluorinated polymer, wherein the fluorinated polymer is dispersed in the water, wherein
   the fluorinated polymer comprises units based on a fluoroolefin and units based on a monomer having a hydrophilic group; and
   the surfactant is a compound of such a structure that to a benzene ring, 1 group represented by the formula -(OQ)ₙOSO₃⁻X⁺ and 2 to 4 phenylalkyl groups are bonded, wherein
   the symbols in the formula have the following meanings:
   Q is a C₂₋₄ alkylene group,
   n is an integer of from 2 to 48, and
   X⁺ is Na⁺ or NH₄⁺.
[2] The aqueous dispersion according to [1], wherein the units based on a monomer having a hydrophilic group comprise at least one type selected from units based on a monomer having a hydroxy group and units based on a monomer having a carboxy group.
[3] The aqueous dispersion according to [1], wherein the units based on a monomer having a hydrophilic group are units based on a monomer having a hydrophilic polyoxyalkylene chain.
[4] The aqueous dispersion according to any one of [1] to [3], wherein n is an integer from 2 to 30.
[5] The aqueous dispersion according to any one of [1] to [4], wherein in the surfactant, each of two groups among the 2 to 4 phenylalkyl groups is bonded to a carbon atom at an ortho position to the carbon atom of the benzene ring to which the group represented by the formula -(OQ)ₙOSO₃⁻X⁺ is bonded.
[6] The aqueous dispersion according to any one of [1] to [5], wherein to the benzene ring in the surfactant, at least one group of either an alkyl group or an alkoxy group is further bonded.
[7] The aqueous dispersion according to any one of [1] to [6], wherein to the benzene ring in the surfactant, at least one methyl group is further bonded.
[8] The aqueous dispersion according to any one of [1] to [7], wherein the group represented by the formula -(OQ)ₙOSO₃⁻X⁺ in the surfactant is a group represented by the formula -(OCH₂CH₂)ₙ₀OSO₃⁻X⁺ (wherein n0 is an integer of from 6 to 24, and X⁺ is Na⁺ or NH₄⁺).
[9] The aqueous dispersion according to any one of [1] to [8], wherein the phenylalkyl groups in the surfactant are phenyl ethyl groups.
[10] The aqueous dispersion according to any one of [1] to [9], wherein the content of the surfactant is from 0.01 to 5 mass% to the total mass of the aqueous dispersion.
[11] An aqueous coating material comprising the aqueous dispersion as defined in any one of [1] to [10].
[12] A coated article comprising a substrate and a coating film disposed on the substrate and formed from the aqueous coating material as defined in [11].
[13] A method for obtaining the aqueous dispersion as defined in [1], by polymerizing a fluoroolefin and a monomer having a hydrophilic group in a system comprising water and a surfactant, wherein
   the surfactant is a compound of such a structure that to a benzene ring, 1 group represented by the formula -(OQ)ₙOSO₃⁻X⁺ and 2 to 4 phenylalkyl groups are bonded, wherein
   the symbols in the formula have the following meanings.
   Q is a C₂₋₄ alkylene group,
   n is an integer of from 2 to 48, and
   X⁺ is Na⁺ or NH₄⁺.
[14] The method for obtaining the aqueous dispersion according to [13], wherein the monomer having a hydrophilic group is at least one type selected from a monomer having a hydroxy group and a monomer having a carboxy group.
[15] The method for obtaining the aqueous dispersion according to [13], wherein the monomer having a hydrophilic group is a monomer having a hydrophilic polyoxyalkylene chain.

### ADVANTAGEOUS EFFECTS OF INVENTION

According to the present invention, it is possible to provide an aqueous dispersion capable of forming a coating film excellent in coloration stability, a method for producing such an aqueous dispersion, an aqueous coating material and a coated article.

### DESCRIPTION OF EMBODIMENTS

Meanings of terms in the present invention are as follows.

A "(meth)acrylate" is a general term for an "acrylate" and a "methacrylate", and "(meth)acryl" is a general term for "acryl" and "methacryl".

A "unit" is a general term for an atomic group which is directly formed by polymerization of a monomer and derived from one molecule of the monomer, and an atomic group obtainable by chemically converting a portion of said atomic group. The content of each unit (mol%) to all units which a polymer comprises, is obtainable by analyzing the polymer by nuclear magnetic resonance spectroscopy.

An "average particle size" is a value of D50 obtainable by a dynamic light scattering method using ELS-8000 (manufactured by Otsuka Electronics Co., Ltd.). Here, D50 is a particle diameter value at the volume cumulative 50 vol% calculated from the small particle side in the particle size distribution of particles measured by a dynamic light scattering method.

The "number average molecular weight" is a value measured by gel permeation chromatography using polystyrene as a standard substance. The "number-average molecular weight" will be referred to also as "Mn".

The "coating film excellent in coloration stability" means a coating film having its coloration (especially yellowing) suppressed.

The aqueous dispersion of the present invention comprises water, a surfactant and a fluorinated polymer, wherein the fluorinated polymer is dispersed in the water.

Here, in the aqueous dispersion of the present invention, "the fluorinated polymer is dispersed in the water" means a state in which the fluorinated polymer is dispersed as particles in the water.

The surfactant contained in the aqueous dispersion of the present invention, is a compound of such a structure that to a benzene ring, 1 group represented by the formula -(OQ)ₙOSO₃⁻X⁺ and 2 to 4 phenylalkyl groups are bonded (hereinafter referred to also as a "specific surfactant").

The symbols in the formula have the following meanings.

Q is a C₂₋₄ alkylene group.

n is an integer of from 2 to 48.

X⁺ is Na⁺ or NH₄⁺.

In the aqueous dispersion of the present invention, the fluorinated polymer comprises units based on a fluoroolefin and units based on a monomer having a hydrophilic group.

The coating film (hereinafter referred to also as the "present coating film") formed from the aqueous dispersion of the present invention is excellent in coloration stability.

The reason for this is not necessarily clear, but it is considered as follows.

The specific surfactant contained in the aqueous dispersion of the present invention, has a hydrophilic portion composed of a polyoxyalkylene group and a sulfate group, and a bulky hydrophobic portion composed of a benzene ring group having two or more phenylalkyl groups bonded thereto.

Further, in the aqueous dispersion of the present invention, the fluorinated polymer contained in the aqueous dispersion contains units based on a monomer having a hydrophilic group. Therefore, the highly hydrophobic and locally hydrophilic fluorinated polymer is considered to be subjected to a strong interfacial effect from the hydrophobic portion and the polyoxyalkylene group of the specific surfactant, and to be present as particles having a narrow particle size distribution in the aqueous dispersion. As a result, the optical interaction (light scattering) between the particles of the fluorinated polymer is suppressed, and the aqueous dispersion (the fluorinated polymer itself) of the present invention is excellent in coloration stability.

Furthermore, the present coating film is formed by packing of the particles of the fluorinated polymer. At that time, if the particle size distribution of the particles of the fluorinated polymer is narrow, the packing tends to proceed in a high density, whereby the uniformity of the coating film structure will be improved. The uniformity of the coating film structure being improved means a state where the voids of the coating film are little, and, in other words, means a state where the particle state of the fluorinated polymer is highly resolved.

That is, the present coating film is formed of particles of the fluorinated polymer having optical interaction (light scattering) suppressed, and, since the uniformity of the coating film structure is high, it is excellent in coloration stability. These effects will be expressed particularly remarkably in the preferred range of the present invention.

In the aqueous dispersion of the present invention, the fluorinated polymer comprises units based on a fluoroolefin and units based on a monomer having a hydrophilic group.

The average particle size of particles of the fluorinated polymer in the present invention is, from the viewpoint of the water resistance of the present coating film and the storage stability of the aqueous dispersion, preferably from 30 to 300 nm, more preferably from 50 to 200 nm.

The fluorinated polymer in the present invention contains units based on a fluoroolefin (hereinafter referred to also as "units F").

A fluoroolefin is an olefin in which at least one of hydrogen atoms is substituted by a fluorine atom. In a fluoroolefin, at least one of hydrogen atoms not substituted by a fluorine atom may be substituted by a chlorine atom.

Specific examples of the fluoroolefin may be tetrafluoroethylene, hexafluoropropylene, chlorotrifluoroethylene and vinylidene fluoride. The fluoroolefin is, from the viewpoint of polymerizability with a monomer having a hydrophilic group, preferably at least one type selected from tetrafluoroethylene and chlorotrifluoroethylene, more preferably chlorotrifluoroethylene. As the fluoroolefin, two or more types may be used in combination.

The content of units F is, from the viewpoint of weather resistance of the present coating film, preferably from 20 to 70 mol%, particularly preferably from 40 to 60 mol%, to all units which the fluorinated polymer comprises.

The fluorinated polymer in the present invention contains units (hereinafter referred to also as "units 1") based on a monomer (hereinafter referred to also as a "monomer 1") having a hydrophilic group. The monomer 1 does not contain a fluorine atom.

The hydrophilic group may be a hydroxy group, a carboxy group, an amino group, a hydrolyzable silyl group, a group having a hydrophilic polyoxyalkylene chain, etc., and from the viewpoint of interaction with the surfactant, at least one type selected from the group consisting of a hydroxy group, a carboxy group, and a group having a hydrophilic polyoxyalkylene chain, is preferred.

The monomer having a carboxy group may be an unsaturated carboxylic acid, a (meth)acrylic acid, a monomer obtainable by reacting a carboxylic acid anhydride to a hydroxy group of the later-described monomer having a hydroxy group, etc.

As the monomer having a carboxy group, a monomer (hereinafter referred to also as a "monomer 11") represented by the formula L¹¹-Z¹¹ is preferred.

L¹¹ is CH₂=CH-, CH(CH₃)=CH-, CH₂=C(CH₃)-, or CH₂=CHO-, preferably CH₂=CH- or CH(CH₃)=CH-.

Z¹¹ is a carboxy group, a C₁₋₁₂ monovalent saturated hydrocarbon group having a carboxy group or -(CH₂)ₙ₁₂OC(O)CH₂CH₂COOH (wherein n12 is an integer of from 1 to 10), preferably a carboxy group or a C₁₋₁₀ carboxyalkyl group.

Specific examples of the monomer 11 may be CH₂=CHCOOH, CH(CH₃)=CHCOOH, CH₂=C(CH₃)COOH, a monomer represented by the formula CH₂=CH(CH₂)ₙ₁₁₁COOH (wherein n111 is an integer of from 1 to 10.) and a monomer represented by the formula CH₂=CHO(CH₂)ₙ₁₁₂OC(O)CH₂CH₂COOH (wherein n112 is an integer of from 1 to 10).

The content of units (hereinafter referred to also as "units 11") based on the monomer 11 is, to all units which the fluorinated polymer comprises, preferably from 1 to 20 mol%, particularly preferably from 2 to 18 mol%.

The monomer having a hydroxy group may be a vinyl ether, a vinyl ester, an allyl ether, an allyl ester, a (meth)acrylic acid ester, an allyl alcohol, etc. having a hydroxy group.

As the monomer having a hydroxy group, a monomer (hereinafter referred to as a "monomer 12") having the formula L¹²-Z¹² or an allyl alcohol is preferred.

L¹² is CH₂=CHO-, CH₂=CHCH₂O-, CH₂=CHCOO- or CH₂=C(CH₃)COO-, preferably CH₂=CHO- or CH₂=CHCH₂O-.

Z¹² is a C₂₋₁₂ monovalent saturated hydrocarbon group having a hydroxy group. The monovalent saturated hydrocarbon group may be linear or branched. Further, the monovalent saturated hydrocarbon group may be made of a ring structure or may contain a ring structure.

As the monovalent saturated hydrocarbon group, preferred is a C₂₋₆ alkyl group, or an alkyl group having a C₆₋₈ cycloalkylene group.

Specific examples of the monomer 12 may be CH₂=CHO-CH₂-cycloC₆H₁₀-CH₂OH, CH₂=CHCH₂O-CH₂-cycloC₆H₁₀-CH₂OH, CH₂=CHOCH₂CH₂OH, CH₂=CHCH₂OCH₂CH₂OH, CH₂=CHOCH₂CH₂CH₂CH₂OH and CH₂=CHCH₂OCH₂CH₂CH₂CH₂OH.

The content of units (hereinafter referred to also as "units 12") based on a monomer 12 is, to all units which the fluorinated polymer comprises, preferably from 1 to 20 mol%, particularly preferably from 2 to 18 mol%.

In a case where the fluorinated polymer comprises both the units 11 and the units 12, the sum of the units 11 and the units 12 is preferably from 1 to 20 mol%, particularly preferably from 2 to 18 mol%.

In the monomer having a hydrophilic polyoxyalkylene chain, the hydrophilic polyoxyalkylene chain is preferably a polyoxyethylene chain, or a polyoxyalkylene chain composed mainly of oxyethylene groups, which contains an oxyalkylene group having 3 or more carbon atoms to such an extent that the hydrophilicity is not inhibited. As the oxyalkylene group having 3 or more carbon atoms, a C_{3 or 4} oxyalkylene group may be mentioned, and an oxypropylene group is preferred. As the hydrophilic polyoxyalkylene chain, a polyoxyethylene chain is preferred. When it contains oxyalkylene groups having 3 or more carbon atoms, the number of oxyethylene groups is preferably at least 60%, more preferably at least 80%, to the total number of oxyalkylene groups in the polyoxyalkylene chain.

In a case where the hydrophilic polyoxyalkylene chain is a copolymer chain comprising oxyethylene groups and oxyalkylene groups having 3 or more carbon atoms, their binding sequence may be a block form in a random form.

A terminal of the hydrophilic oxyalkylene chain may be the above hydrophilic group such as a hydroxy group, or may be a group other than the above hydrophilic group, such as an alkoxy group. As the group other than the above hydrophilic group, an alkoxy group having at most 4 carbon atoms, such as a methoxy group, is preferred. It is particularly preferred that the terminal of the hydrophilic oxyalkylene chain is a hydroxy group. Here, in a case where a group having a hydrophilic polyoxyalkylene chain has a hydroxy group, the hydroxy group of said group having a hydrophilic polyoxyalkylene chain, shall not be included in the scope of the hydroxy group as the above hydrophilic group in the present invention.

The monomer having a hydrophilic polyoxyalkylene chain is preferably a monomer (hereinafter referred to also as a "monomer 13"), represented by the formula L¹³-Y¹³-Z¹³.

L¹³ is CH₂=CHO- or CH₂=CHCH₂O-.

Y¹³ is a C₂₋₁₂ divalent saturated hydrocarbon group. The divalent saturated hydrocarbon group may be linear or branched. Further, the divalent saturated hydrocarbon group may be made of a ring structure, or may contain a ring structure.

The divalent saturated hydrocarbon group is preferably a C₄₋₁₂ alkylene group or an alkylene group containing a C₆₋₈ cycloalkylene group.

The divalent saturated hydrocarbon group is preferably a group represented by the formula -CH₂-cycloC₆H₁₀-CH₂-, -CH₂CH₂-, -CH₂CH₂CH₂CH₂- or a group represented by the formula -CH₂CHY¹³¹-. Here, -cycloC₆H₁₀- represents a cyclohexylene group, and binding sites of (-cycloC₆H₁₀-) are not particularly limited, and are usually 1,4-. Further, Y¹³¹ represents a C₁₋₁₀ alkyl group.

Z¹³ is a group represented by the formula -O(MO)ₘR.

M is an alkylene group, and (MO)ₘ is either a polyoxyethylene chain, or a polyoxyalkylene chain in which some of m MO are oxyalkylene groups having 3 or more carbon atoms and the rest are oxyethylene groups. (MO)ₘ is preferably a polyoxyethylene chain represented by (CH₂CH₂O)ₘ.

R is a hydrogen atom or an alkyl group, preferably a hydrogen atom. m is an integer of from 6 to 24, preferably an integer of from 10 to 20.

Specific examples of the monomer 13 may be CH₂=CHO-CH₂-cycloC₆H₁₀-CH₂-O(CH₂CH₂O)ₙ₁₃H, CH₂=CHCH₂O-CH₂-cycloC₆H₁₀-CH₂-O(CH₂CH₂O)ₙ₁₃H, CH₂=CHOCH₂CH₂O(CH₂CH₂O)ₙ₁₃H, CH₂=CHCH₂OCH₂CH₂O(CH₂CH₂O)ₙ₁₃H and CH₂=CHCH₂OCH₂CH(C₄H₉)O(CH₂CH₂O)ₙ₁₃H (n13 in the formulae is an integer of from 10 to 20).

The content of units (hereinafter referred to also as "units 13") derived from the monomer 13 is, to all units which the fluorinated polymer comprises, preferably from 0.1 to 5 mol%, particularly preferably from 0.2 to 3 mol%.

As the monomer 1, two or more types may be used in combination.

Units 1, from the viewpoint of interaction between the fluorinated polymer and the surfactant, preferably comprise at least one type selected from units 11 and units 12, more preferably comprise at least one type selected from units 11 and units 12, and units 13, or comprise units 12, particularly preferably comprise units 12 and units 13 from such a viewpoint that the hydrophilicity of the fluorinated polymer will be suitable.

The content of units 1 is, to all units which the fluorinated polymer comprises, preferably from 0.1 to 25 mol%, particularly preferably from 0.2 to 21 mol%.

The contents of at least one type selected from units 11 and units 12, and units 13, are, from the viewpoint of interaction between the fluorinated polymer and the surfactant, in this order to all units which the fluorinated polymer comprises, preferably from 1 to 20 mol% and from 0.1 to 5 mol%, particularly preferably from 2 to 18 mol% and from 0.2 to 3 mol%.

The contents of units 11 or units 12, and units 13, are, from the viewpoint of interaction between the fluorinated polymer and the surfactant, in this order to all units which the fluorinated polymer comprises, preferably from 1 to 20 mol % and from 0.1 to 5 mol%, particularly preferably from 2 to 18 mol% and from 0.2 to 3 mol%.

Further, in a case where a curing agent is blended into the aqueous dispersion of the present invention to prepare a curable aqueous coating material, hydroxy groups of units 12, carboxy groups of units 11 and hydroxy groups of units 13 having the hydroxy groups become cross-linking points, whereby the cross-linking reaction between the fluorinated polymers will proceed via the curing agent to improve the curability of the present coating film, and the coating film physical properties such as the weather resistance, water resistance, chemical resistance, heat resistance, etc. will be improved.

The fluorinated polymer in the present invention, with a view to adjusting the coating film physical properties such as water resistance, chemical resistance, heat resistance, flexibility, etc., preferably further contains units (hereinafter referred to also as "units 2") based on a monomer (hereinafter referred to also as a "monomer 2") containing no fluorine atom and having no hydrophilic group.

The monomer 2 may be at least one type selected from the group consisting of a vinyl ether, a vinyl ester, an allyl ether, an allyl ester and a (meth)acrylic acid ester, containing no fluorine atom and having no hydrophilic group.

The monomer 2 is preferably a monomer represented by the formula L²-Z².

L² is CH₂=CHOC(O)-, CH₂=CHCH₂OC(O)-, CH₂=CHO-, CH₂=CHCH₂O- or CH₂=C(CH₃)COO-.

Z² is a C₂₋₁₂ monovalent hydrocarbon group. The monovalent hydrocarbon group may be linear or branched. Further, the monovalent hydrocarbon group may be made from a ring structure, or may contain a ring structure. Further, the monovalent hydrocarbon group may be a monovalent saturated hydrocarbon group or a monovalent unsaturated hydrocarbon group.

The monovalent hydrocarbon group is preferably an alkyl group, a cycloalkyl group, an aryl group or an aralkyl group, particularly preferably a C₂₋₁₂ alkyl group, a C₆₋₁₀ cycloalkyl group, a C₆₋₁₀ aryl group or a C₇₋₁₂ aralkyl group.

Specific examples of the alkyl group may be an ethyl group, a tert-butyl group, a hexyl group, a nonyl group, a decyl group and a dodecyl group.

A specific example of the cycloalkyl group may be a cyclohexyl group.

A specific example of the aralkyl group may be a benzyl group.

Specific examples of the aryl group may be a phenyl group and a naphthyl group.

Further, a hydrogen atom of a cycloalkyl group, an aryl group or an aralkyl group may be substituted by an alkyl group. In such a case, the number of carbon atoms in the alkyl group as a substituent shall not be included in the number of carbon atoms in the cycloalkyl group or the aryl group.

Specific examples of the monomer 2 may be ethyl vinyl ether, tert-butyl vinyl ether, 2-ethylhexyl vinyl ether, cyclohexyl vinyl ether, vinyl acetate, vinyl pivalate, vinyl neononanoate (manufactured by HEXION, trade name "VeoVa 9"), vinyl neodecanoate (manufactured by HEXION, trade name "VeoVa 10"), vinyl benzoate, tert-butyl (meth)acrylate and benzyl (meth)acrylate.

As the monomer 2, two or more types may be used in combination.

The content of units 2 is, to all units which the fluorinated polymer comprises, preferably from 0 to 50 mol%, particularly preferably from 5 to 40 mol%.

The fluorinated polymer in the present invention preferably contains units F, units 1 and units 2 in amounts, in this order, of from 20 to 70 mol%, from 0.1 to 25 mol%, and from 0 to 50 mol%, to all units which the fluorinated polymer comprises.

Particularly, the fluorinated polymer preferably contains units F, units 11 or units 12, units 13 and units 2 in amounts, in this order, of from 20 to 70 mol%, from 1 to 20 mol%, from 0.1 to 5 mol% and from 0 to 50 mol%, to all units which the fluorinated polymer comprises.

Mn of the fluorinated polymer in the present invention is preferably from 30,000 to 200,000, more preferably 50,000 to 180,000.

The content of the fluorinated polymer in the aqueous dispersion of the present invention is preferably from 10 to 70 mass% to the total mass of the aqueous dispersion.

The surfactant (specific surfactant) in the present invention is a compound of such a structure that to a benzene ring, 1 group represented by the formula -(OQ)ₙOSO₃⁻X⁺ (wherein Q is a C₂₋₄ alkylene group, n is an integer of from 2 to 48, and X⁺ is Na⁺ or NH₄⁺) and 2 to 4 phenylalkyl groups are bonded.

That is, it has such a structure that to a benzene ring, 2 to 4 phenylalkyl groups and 1 group represented by the formula -(OQ)ₙOSO₃-X⁺ are, respectively, bonded to different carbon atoms among carbon atoms constituting the benzene ring. Here, to the phenyl moiety of the phenylalkyl group, an alkyl group or an alkoxy group may be bonded.

The number of carbon atoms in the alkyl moiety of the phenylalkyl group is preferably 1 or 2, and is particularly preferably 2 from the viewpoint of the surface activating effect of the specific surfactant due to such that the alkyl moiety alleviates intramolecular interaction (conjugation, etc.) between benzene rings, from the viewpoint of the surface activating effect of the specific surfactant due to the chain length or the steric structure of the above alkyl moiety, and from the viewpoint of the ultraviolet absorbing effect of the specific surfactant.

The number of phenylalkyl groups in the specific surfactant is preferably 2. The respective phenylalkyl groups may be the same or different, but are preferably the same.

Specific examples of the phenylalkyl group may be a benzyl group (PhCH₂-) and a phenylethyl group. As the phenylalkyl group, a phenyl ethyl group is preferred. The phenylethyl group may be a 1-phenylethyl group (PhCH₂CH₂-) or a 2-phenylethyl group (PhCH(CH₃)-), and is preferably a 2-phenylethyl group.

To the benzene ring in the specific surfactant, at least one group of either an alkyl group or an alkoxy group (hereinafter referred to also as a "substituent") is preferably bonded. The substituent is preferably a C₁₋₄ alkyl group or a C₁₋₄ alkoxy group, more preferably a C₁₋₄ alkyl group, particularly preferably a methyl group. The substituent is a hydrophobic electron donating group, and when it is bonded to the benzene ring, the electronic stability of the benzene ring to which a plurality of phenylalkyl groups are bonded, will be improved, to increase the surface activating effect of the specific surfactant.

In a case where the substituent is bonded, it is preferred that one substituent is bonded to the benzene ring. Here, in a case where two or more substituents are bonded, such substituents may be the same or different.

In the group represented by the formula -(OQ)ₙOSO₃⁻X⁺ in the specific surfactant, Q is preferably -CH₂CH₂-. Here, in a case where Q is a C_{3 or 4} alkylene group, Q may be a straight-chain alkylene group or a branched-chain alkylene group. In a case where a plurality of Q are present, they may be the same or different. Further, in a case where a plurality of Q are present, their binding order is not particularly limited and may be in a block form or in a random form.

n is an integer of from 2 to 48, preferably an integer of from 2 to 30, more preferably an integer of from 6 to 24.

A specific example of the group represented by the formula -(OQ)ₙOSO₃⁻X⁺ may be a group represented by the formula -(OCH₂CH₂)ₙ₀OSO₃⁻X⁺ (wherein, n0 is an integer of from 6 to 24, and X⁺ is Na⁺ or NH₄⁺).

As the specific surfactant, a compound represented by the following formula (S1) is preferred.

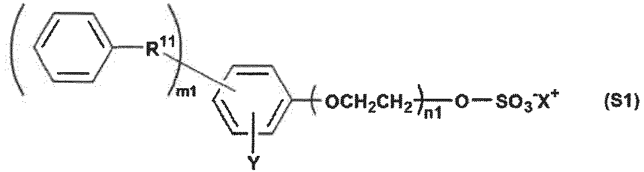

In the above formula (S1), R¹¹ is -CH₂CH₂- or -CH(CH₃)-. n1 is an integer from 2 to 48, preferably an integer of from 6 to 48, particularly preferably an integer of from 6 to 24. X⁺ is Na⁺ or NH₄⁺, and Y is a C₁₋₄ alkyl group, preferably a methyl group. m1 is an integer of from 2 to 4, particularly preferably 2.

The plurality of R¹¹ may be the same or different, but are preferably the same.

In the specific surfactant, from the viewpoint of the antifogging properties of the present coating film, each of two groups among the 2 to 4 phenylalkyl groups is preferably bonded to a carbon atom at an ortho position to the carbon atom of the benzene ring to which the group represented by the above formula -(OQ)ₙOSO₃⁻X⁺ is bonded.

As the specific surfactant, a compound represented by the following formula (S2) is particularly preferred.

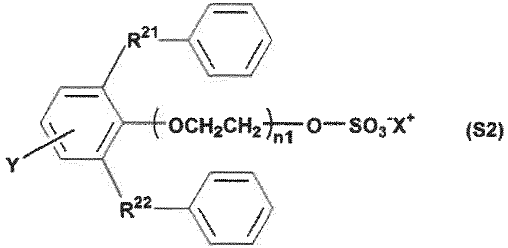

In the above formula (S2), R²¹ and R²² are each independently -CH₂CH₂- or -CH(CH₃)-, preferably -CH(CH₃)-. n1 is an integer of from 2 to 48, preferably an integer of from 6 to 48, particularly preferably an integer of from 6 to 24. X⁺ is Na⁺ or NH₄⁺. Y is a C₁₋₄ alkyl group, preferably a methyl group. Further, Y is preferably bonded to a carbon atom at the para position to the carbon atom of the benzene ring to which the group represented by the above formula -(OQ)ₙOSO₃⁻X⁺ is bonded. R²¹ and R²² are preferably the same.

The content of the specific surfactant in the aqueous dispersion of the present invention is, to the total mass of the aqueous dispersion, preferably from 0.0001 to 10 mass%, more preferably from 0.001 to 5 mass%, further preferably from 0.01 to 5 mass%, particularly preferably from 0.05 to 2 mass%, most preferably from 0.05 to 1 mass%. Further, the content of the specific surfactant is, to the total mass of the fluorinated polymer in the present invention, preferably from 0.001 to 10 mass%, more preferably from 0.01 to 5 mass%, particularly preferably from 0.1 to 1 mass%. When the specific surfactant is within the above range, a coating film will be formed by denser packing, whereby the water resistance and antifogging properties of the coating film will be further improved.

The aqueous dispersion of the present invention contains, as a coating material solvent (dispersion medium), water only, or a mixed liquid of water and a water-soluble organic solvent.

Specific examples of the water-soluble organic solvent may be tert-butanol, propylene glycol, dipropylene glycol, dipropylene glycol monomethyl ether and tripropylene glycol. The content of the water-soluble organic solvent is preferably from 1 to 40 parts by mass to 100 parts by mass of water.

The aqueous dispersion of the present invention preferably contains only water as the dispersion medium, in an amount of from 10 to 90 mass% to the total mass of the aqueous dispersion.

In the aqueous dispersion of the present invention, within a range not to impair the effect of the present invention, components (hereinafter referred to also as "other components") other than the fluorinated polymer, the specific surfactant and water, may be contained.

Specific examples of such other components may be a surfactant other than the specific surfactant, a fluorinated polymer other than the above-described fluorinated polymer, a molecular weight modifier, a color tone adjusting agent, an ultraviolet absorber, a low-staining agent and a curing agent.

The production method of the present invention is a method of obtaining an aqueous dispersion wherein a fluorinated polymer comprising units F and units 1 is dispersed in water, by polymerizing a fluoroolefin and a monomer 1 in a system containing water and the specific surfactant. As the monomer 1, the monomer 12 or a combination of the monomer 12 and the monomer 13, is preferred.

In the production method of the present invention, a monomer 2 may further be used in addition to the fluoroolefin and the monomer 1. Further, still other monomers may also be used.

In the production method of the present invention, it is preferred to polymerize a fluoroolefin, a monomer 12, a monomer 13 and, as the case requires, a monomer 2.

The respective components are as described above in the aqueous dispersion of the present invention, and therefore, their description will be omitted here. Further, the amounts of the respective components to be used, may be suitably determined so that the contents of the respective components contained in the obtainable aqueous dispersion would be the above-described contents of the respective components contained in the aqueous dispersion of the present invention.

In the polymerization, a surfactant other than the specific surfactant, a radical polymerization initiator, a chain transfer agent, a chelating agent, a pH adjusting agent, etc. may be added.

As specific examples of the polymerization method, an emulsion polymerization method and a suspension polymerization method may be mentioned.

The temperature for the polymerization is usually from 0 to 100°C. The pressure for the polymerization is usually from 0.2 to 5 MPa.

The aqueous coating material of the present invention (hereinafter referred to also as "the present aqueous coating material") may further contain, in addition to the aqueous dispersion of the present invention, additives such as a pigment (inorganic pigment, organic pigment, etc.), a curing agent, a curing assistant, a coalescent, a thickener, a defoamer, a light stabilizer, a ultraviolet absorber, a surface modifier, a matting agent, a dispersing agent, a leveling agent, a degassing agent, a filler, a heat stabilizer, an antistatic agent, a rust inhibitor, a silane coupling agent, a soil release agent, a low pollution treatment agent, a plasticizer, an adhesive, etc.

The present aqueous coating material preferably contains the aqueous dispersion in an amount of from 10 to 80 mass% to the total mass of the present aqueous coating material. When the content of the aqueous dispersion is at least 10 mass%, the weather resistance of the present coating film will be improved, and when it is at most 80 mass%, the film forming properties of the present aqueous coating material will be improved.

The present aqueous coating material preferably contains the fluorinated polymer in an amount of from 10 to 70 mass% to the total mass of the present aqueous coating material.

The coated article of the present invention comprises a substrate and a coating film (present coating film) disposed on the substrate and formed from the present aqueous coating material.

Specific examples of the substrate may be an organic material such as a resin, rubber, wood, etc., an inorganic material such as concrete, glass, ceramics, stone, etc., iron, an iron alloy, aluminum, an aluminum alloy, etc.

The thickness of the present coating film is preferably from 5 to 300 µm, more preferably from 10 to 100 µm. When the thickness of the coating film is at least 5 µm, the blocking resistance of the present coating film will be improved, and when it is at most 300 µm, the weather resistance of the present coating film will be improved.

The coated article can be produced by applying the present aqueous coating material to the surface of the substrate, followed by drying to form the present coating film. The present aqueous coating material may be applied directly to the surface of the substrate, or may be applied onto a surface having the surface of the substrate subjected to known surface treatment (undercoating treatment, etc.). Further, after forming an undercoat layer on the substrate, it may be applied on the undercoat layer.

As specific examples for the coating method of the present coating material, methods of using coating apparatus such as a brush, a roller, a dipping means, a spray, a roll coater, a die coater, an applicator, a spin coater, etc. may be mentioned.

The drying temperature and curing temperature after coating are preferably from 25°C to 300°C.

According to the present invention, it is possible to obtain an aqueous dispersion capable of producing an aqueous coating material for forming a coating film excellent in coloration stability, such that by the method described in Examples given below, the b value of the coating film is less than 0.8 (preferably less than 0.6, particularly preferably less than 0.4).

According to the present invention, it is possible to obtain an aqueous dispersion capable of producing an aqueous coating material for forming a coating film excellent in water resistance such that by the method described in Examples given below, occurrence of hazing and blistering of the coating film is not observed in an area of less than 70% (preferably less than 80%, particularly preferably at least 80%) of the coating film surface.

### EXAMPLES

Hereinafter, the present invention will be described in detail with reference to Examples. Ex. 1, Ex. 2, Ex. 6 and Ex. 7 are Examples of the present invention, and Ex. 3 to Ex. 5 and Ex. 8 to Ex. 10 are Comparative Examples. However, the present invention is not limited to these Examples. Further, the blend amounts of the respective components in Table given later, represent the mass amounts.

### [Evaluation of coating film]

### (Preparation of test plate)

On the surface of a slate plate with a length of 120 mm, a width of 60 mm and a thickness of 15 mm, V-SELAN (registered trademark) # 700 manufactured by Dai Nippon Toryo Co., Ltd. was applied by an air spray, so that the dried film thickness would be 20 µm, and dried at 100°C for 210 seconds to form an undercoat layer.

Then, on the undercoat layer, each aqueous coating material obtained by the method described below, was applied by an air spray so that the dried film thickness would be 40 µm, and dried at 100°C for 210 seconds to form a coating film thereby to obtain a test plate.

With respect to the obtained test plate, the following evaluations were carried out.

### (Coloration stability of coating film)

Yellowing of the coating film formed in accordance with the method described above, was measured by using a color difference meter, and the b value of the coating film was calculated. Specifically, the color difference (the b value) was measured by using a handy-type color difference meter (NF777 manufactured by Nippon Denshoku Industries Co., Ltd.) and was adopted as the evaluation value of the coloration stability of the coating film.
S: The b value of the coating film is less than 0.4.
A: The b value of the coating film is at least 0.4 and less than 0.6.
B: The b value of the coating film is at least 0.6 and less than 0.8.
C: The b value of the coating film is at least 0.8.

### (Water resistance of coating film)

The test plate was immersed for 18 hours in warm water at 60°C, then immersed for 15 hours in cold water of 5°C and then dried at 5°C, whereupon the appearance of the coating film was evaluated according to the following standards.
S: In an area of at least 80% of the coating film surface, occurrence of hazing or blistering was not observed.
A: In an area of at least 70% and less than 80% of the coating film surface, occurrence of hazing or blistering was not observed.
B: In an area of at least 60% and less than 70% of the coating film surface, occurrence of hazing or blistering was not observed.
C: In an area of more than 40% of the coating film surface, occurrence of hazing or blistering was observed.

### [Main materials used in preparation of aqueous dispersion]

### Fluoroolefin: chlorotrifluoroethylene (CTFE)

Monomer 1: CH₂=CHOCH₂-cycloC₆H₁₀-CH₂O(CH₂CH₂O)₁₅H (average molecular weight: 830, -cycloC₆H₁₀- represents a 1,4-cyclohexylene group) (CM-15EOVE corresponding to monomer 13), 4-hydroxymethyl cyclohexylmethyl vinyl ether (CHMVE corresponding to monomer 12), hydroxyethyl allyl ether (HEAE corresponding to monomer 12)
Monomer 2: cyclohexyl vinyl ether (CHVE), ethyl vinyl ether (EVE), Veova9 (V9), benzoic acid vinyl ester (VBn)
Surfactants 1 to 4: compounds represented by the later-described formula (S3) to formula (S6)
Surfactant 5: sodium lauryl sulfate

### [Materials used in production of aqueous coating material]

Coalescent: EHG, trade name, manufactured by Nippon Nyukazai Co., Ltd.
Thickener: Primal (registered trademark) TT-615 (polyacrylic thickener), manufactured by Rohm & Haas.
Anti-foaming agent: Dehidoran (registered trademark) 1620, manufactured by BASF.

### [Ex. 1]

In an autoclave, CHVE (113 g), EVE (188 g), CHMVE (153 g), CM-15EOVE (75 g), deionized water (970 g), potassium carbonate (K₂CO₃) (1.7 g), surfactant 1 (a compound represented by the following formula (S3), wherein n≒20) (2.1 g), ammonium persulfate (0.14 g) and CTFE (553 g) were introduced and polymerized for 24 hours at 60°C. Thereafter, the solution in the autoclave was filtered, and the fluorinated polymer concentration was adjusted to 50 mass%, to obtain an aqueous dispersion 1 containing particles of the fluorinated polymer with an average particle size of 140 nm.

Here, in the fluorinated polymer, the contents (mol%) of units based, respectively, on CHVE, EVE, CHMVE, CM-15EOVE and CTFE were as shown in the following Table 1.

The aqueous dispersion 1 (80 g), the coalescent (6 g), the thickener (0.4 g), the antifoaming agent (0.6 g) and ion-exchanged water (13 g) were added and mixed to obtain an aqueous coating material 1.

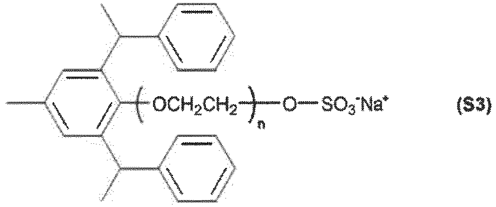

### [Ex. 2]

An aqueous dispersion 2 was obtained in the same manner as in Ex. 1 except that instead of the surfactant 1, surfactant 2 (a compound represented by the following formula (S4), wherein n≒20) was used, and an aqueous coating material 2 was obtained in the same manner as in Ex. 1 except that the aqueous dispersion 2 was used instead of the aqueous dispersion 1.

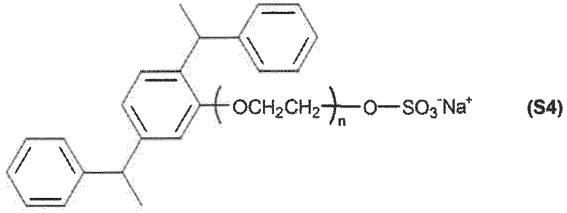

### [Ex. 3]

An aqueous dispersion 3 was obtained in the same manner as in Ex. 1 except that instead of the surfactant 1, surfactant 3 (a compound represented by the following formula (S5), wherein n≒20) was used, and an aqueous coating material 3 was obtained in the same manner as in Ex. 1 except that the aqueous dispersion 3 was used instead of the aqueous dispersion 1.

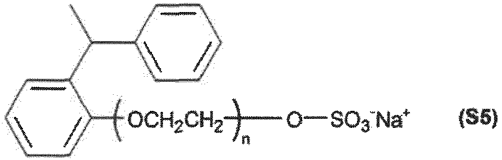

### [Ex. 4]

An aqueous dispersion 4 was obtained in the same manner as in Ex. 1 except that instead of the surfactant 1, surfactant 4 (a compound represented by the following formula (S6), wherein n≒20) was used, and an aqueous coating material 4 was obtained in the same manner as in Ex. 1 except that the aqueous dispersion 4 was used instead of the aqueous dispersion 1.

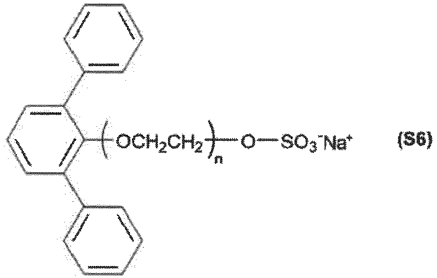

### [Ex. 5]

An aqueous dispersion 5 was obtained in the same manner as in Ex. 1 except that instead of the surfactant 1, surfactant 5 (sodium lauryl sulfate) was used, and an aqueous coating material 5 was obtained in the same manner as in Ex. 1 except that the aqueous dispersion 5 was used instead of the aqueous dispersion 1.

### [Ex. 6]

In the same manner as in Ex. 1 except that the type and amount of monomers used were changed as shown in Table 1, an aqueous dispersion 6 containing particles of a fluorinated polymer, with the fluorinated polymer concentration of 50 mass% and an average particle size of 194 nm, was obtained.

Here, in the fluorinated polymer, the contents (mol%) of units based, respectively, on HEAE, V9, EVE, VBn and CTFE were as shown in the following Table 1.

The aqueous dispersion 6 (80 g), the coalescent (6 g), the thickener (0.4 g), the antifoaming agent (0.6 g) and ion-exchanged water (13 g) were added and mixed to obtain an aqueous coating material 6.

### [Ex. 7]

An aqueous dispersion 7 was obtained in the same manner as in Ex. 6 except that the surfactant 2 was used instead of the surfactant 1, and an aqueous coating material 7 was obtained in the same manner as in Ex. 6 except that the aqueous dispersion 7 was used instead of the aqueous dispersion 6.

### [Ex. 8]

An aqueous dispersion 8 was obtained in the same manner as in Ex. 6 except that the surfactant 3 was used instead of the surfactant 1, and an aqueous coating material 8 was obtained in the same manner as in Ex. 6 except that the aqueous dispersion 8 was used instead of the aqueous dispersion 6.

### [Ex. 9]

An aqueous dispersion 9 was obtained in the same manner as in Ex. 6 except that the surfactant 4 was used instead of the surfactant 1, and an aqueous coating material 9 was obtained in the same manner as in Ex. 6 except that the aqueous dispersion 9 was used instead of the aqueous dispersion 6.

### [Ex. 10]

An aqueous dispersion 10 was obtained in the same manner as in Ex. 6 except that the surfactant 5 was used instead of the surfactant 1, and an aqueous coating material 10 was obtained in the same manner as in Ex. 6 except that the aqueous dispersion 10 was used instead of the aqueous dispersion 6.

Using each of the aqueous coating materials 1 to 10, a test plate was prepared in accordance with the procedure as described above, and the coloration stability and water resistance of the coating film were evaluated. The results are shown in Table 1. In Table 1, "Content of surfactant" and "Content of other components" are the contents (mass%) of the surfactant and other components to the total mass of the fluorinated polymer. Further in Table 1, "fluorinated polymer concentration" is the fluorinated polymer concentration (mass%) in the aqueous dispersion.

**[Table 1]**

| | | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|
| Type of aqueous coating material | | | | 1 | 2 | 3 | 4 | 5 | 6 | 7 | 8 | 9 | 10 |
| Content of units in fluorinated polymer (mol%) | | Units F | CTFE | 50 | 50 | 50 | 50 | 50 | 44 | 44 | 44 | 44 | 44 |
| | | Units 1 | CM-15EOVE | 1.0 | 1.0 | 1.0 | 1.0 | 1.0 | | | | | |
| | | | CHMVE | 10 | 10 | 10 | 10 | 10 | | | | | |
| | | | HEAE | | | | | | 16 | 16 | 16 | 16 | 16 |
| | | Units 2 | CHVE | 10 | 10 | 10 | 10 | 10 | | | | | |
| | | | EVE | 29 | 29 | 29 | 29 | 29 | 19 | 19 | 19 | 19 | 19 |
| | | | V9 | | | | | | 19 | 19 | 19 | 19 | 19 |
| | | | VBn | | | | | | 2 | 2 | 2 | 2 | 2 |
| Content of surfactant (mass%) | | Surf factant 1 | | 0.2 | | | | | 0.2 | | | | |
| | | Surf factant 2 | | | 0.2 | | | | | 0.2 | | | |
| | | Surf factant 3 | | | | 0.2 | | | | | 0.2 | | |
| | | Surf factant 4 | | | | | 0.2 | | | | | 0.2 | |
| | | Surf factant 5 | | | | | | 0.2 | | | | | 0.2 |
| Other components (mass%) | | Potassi um carbonate | | 0.15 | 0.15 | 0.15 | 0.15 | 0.15 | 0.15 | 0.15 | 0.15 | 0.15 | 0.15 |
| | | Ammoni um persulfate | | 0.01 | 0.01 | 0.01 | 0.01 | 0.01 | 0.01 | 0.01 | 0.01 | 0.01 | 0.01 |
| Solid content concentration in aqueous dispersion (mass%) | | | | 50 | 50 | 50 | 50 | 50 | 50 | 50 | 50 | 50 | 50 |
| Average particle size of fluorinated polymer particles (nm) | | | | 140 | 138 | 145 | 120 | 100 | 194 | 190 | 192 | 180 | 166 |
| Evaluation results | Coloration stability of coating film | | | S | A | C | C | C | A | B | C | C | C |
| | Water resistance of coating film | | | S | S | A | S | A | A | A | B | A | C |

As shown in Ex. 1, Ex. 2, Ex. 6 and Ex. 7 in Table 1, it was shown possible to reduce yellowing of the coating film if the surfactant having a specific structure is incorporated to the aqueous dispersion having the fluorinated polymer dispersed in water. Further, it was shown that the coating film was excellent also in water resistance.

The entire disclosures of Japanese Patent Application No. 2017-064744 filed on March 29, 2017 and Japanese Patent Application No. 2017-246544 filed on December 22, 2017 including specifications, claims, drawings and summaries are incorporated herein by reference in their entireties.

## Claims

1. An aqueous dispersion comprising water, a surfactant and a fluorinated polymer, wherein the fluorinated polymer is dispersed in the water, wherein
the fluorinated polymer comprises units based on a fluoroolefin and units based on a monomer having a hydrophilic group; and
the surfactant is a compound of such a structure that to a benzene ring, 1 group represented by the formula -(OQ)ₙOSO₃⁻X⁺ and 2 to 4 phenylalkyl groups are bonded, wherein
the symbols in the formula have the following meanings:
Q is a C₂₋₄ alkylene group,
n is an integer of from 2 to 48, and
X⁺ is Na⁺ or NH₄⁺.

2. The aqueous dispersion according to Claim 1, wherein the units based on a monomer having a hydrophilic group comprise at least one type selected from units based on a monomer having a hydroxy group and units based on a monomer having a carboxy group.

3. The aqueous dispersion according to Claim 1, wherein the units based on a monomer having a hydrophilic group are units based on a monomer having a hydrophilic polyoxyalkylene chain.

4. The aqueous dispersion according to any one of Claims 1 to 3, wherein n is an integer from 2 to 30.

5. The aqueous dispersion according to any one of Claims 1 to 4, wherein in the surfactant, each of two groups among the 2 to 4 phenylalkyl groups is bonded to a carbon atom at an ortho position to the carbon atom of the benzene ring to which the group represented by the formula -(OQ)ₙOSO₃⁻X⁺ is bonded.

6. The aqueous dispersion according to any one of Claims 1 to 5, wherein to the benzene ring in the surfactant, at least one group of either an alkyl group or an alkoxy group is further bonded.

7. The aqueous dispersion according to any one of Claims 1 to 6, wherein to the benzene ring in the surfactant, at least one methyl group is further bonded.

8. The aqueous dispersion according to any one of Claims 1 to 7, wherein the group represented by the formula -(OQ)ₙOSO₃⁻X⁺ in the surfactant is a group represented by the formula -(OCH₂CH₂)ₙ₀OSO₃⁻X⁺ (wherein n0 is an integer of from 6 to 24, and X⁺ is Na⁺ or NH₄⁺).

9. The aqueous dispersion according to any one of Claims 1 to 8, wherein the phenylalkyl groups in the surfactant are phenyl ethyl groups.

10. The aqueous dispersion according to any one of Claims 1 to 9, wherein the content of the surfactant is from 0.01 to 5 mass% to the total mass of the aqueous dispersion.

11. An aqueous coating material comprising the aqueous dispersion as defined in any one of Claims 1 to 10.

12. A coated article comprising a substrate and a coating film disposed on the substrate and formed from the aqueous coating material as defined in Claim 11.

13. A method for obtaining the aqueous dispersion as defined in Claim 1, by polymerizing a fluoroolefin and a monomer having a hydrophilic group in a system comprising water and a surfactant, wherein
the surfactant is a compound of such a structure that to a benzene ring, 1 group represented by the formula -(OQ)ₙOSO₃⁻X⁺ and 2 to 4 phenylalkyl groups are bonded, wherein
the symbols in the formula have the following meanings.
Q is a C₂₋₄ alkylene group,
n is an integer of from 2 to 48, and
X⁺ is Na⁺ or NH₄⁺.

14. The method for obtaining the aqueous dispersion according to Claim 13, wherein the monomer having a hydrophilic group is at least one type selected from a monomer having a hydroxy group and a monomer having a carboxy group.

15. The method for obtaining the aqueous dispersion according to Claim 13, wherein the monomer having a hydrophilic group is a monomer having a hydrophilic polyoxyalkylene chain.
